# EUROPEAN PATENT SPECIFICATION

(11) **EP 0 585 147 B1**
(45) Date of publication and mention of the grant of the patent: **08.04.1998**
(21) Application number: 93401725.2
(22) Date of filing: 02.07.1993
(51) Int. Cl.: C08J 9/00, C08J 9/14, C08L 23/02

(54) **Low density polyolefin foam, foamable polyolefin compositions and process for making same**
Polyolefinschaum mit geringer Dichte, aufschäumende Polyolefinzusammensetzungen und Herstellungsverfahren
Mousse de polyoléfine à base densité, compositions de polyoléfines expansibles et procédé pour les fabriquer

(30) Priority: 27.08.1992 US 935721
(43) Date of publication of application: 02.03.1994
(73) Proprietor: ASTRO-VALCOUR, INCORPORATED, Glens Falls New York 12801 (US)
(72) Inventor: Kisner, Ronnie D., Queensbury, New York 12804 (US)
(74) Representative: Wagret, Frédéric

(56) References cited:
- EP-A- 0 229 882
- WO-A-88/08864
- DE-A- 2 132 295
- US-A- 3 793 283
- US-A- 4 692 471

## Description

### BACKGROUND OF THE INVENTION

### 1. Field of the Invention

This invention pertains to the art of making foamed low density polyethylene plastic of relatively large thickness and relatively large lateral cross-section and having a density of 14,4 to 40 kilograms per cubic meter (kg/m³). More specifically, this invention pertains to the art of making low density foamed plastic boards, planks, beams of substantial dimensions measuring several centimeters thick and wide and a few to several decimeters long used primarily for cushioning, packaging,building insulation, flotation, sound deadening.

### 2. Description of the Prior Art

Heretofore, polyolefin foamed plastics in the form of planks, beams, etc. were produced using a variety of blowing agents. For example, it has been common practice to use chlorofluorocarbons (CFC's) and, more recently, hydrochlorofluorocarbons (HCFC's) as blowing agent. Such blowing agents have been found to deplete the planet Earth's ozone layer which serves as a shield to protect the planet from cancer-promoting ultraviolet radiation. Governmental pressure is mounting to severely restrict the release of CFC's and HCFC's to the atmosphere in order to slow down or stop the depletion of the ozone layer.

There is great environmental and commercial interest in the elimination of all ozone-depleting chemicals used as blowing agents. While HCFC's have a lower ozone depletion potential (ODP) than CFC's, the level is still unacceptably high and therefore the use of HCFC's is also coming under greater regulation. It is possible to make polyolefin foam using tight hydrocarbons such as isobutane which, however, leads to a worsening of physical properties, e.g., a decrease in thermal stability and undergoing a greater permanent change in dimensions when die cut.

U. S. Patent No. 3,067,147 (Rubens et al) discloses the production of polyethylene foam having a density as low as 27,2kg/m³ using 1,2-dichloro-tetrafluoroethane. There is no disclosure of isobutane as a blowing agent or of any stability control agent. This patent discloses that other hydrocarbon blowing agents produce foams having non-uniform large cells.

U. S. Patent No. 3,379,802 (Raley et al) and U. S. Patent No. 3,766,099 (Kawai et al) disclose polyethylene foams containing synthetic elastomers but fail to disclose polyolefin foams having densities as low as about 14,4 kg/m³. The lowest density foam disclosed by Raley et al is 27,2 kg/m³ and the lowest density foam disclosed by Kawai et al is 26,89 kg/m³ Kawai et al fails to utilize a stability control agent or an isobutane blowing agent and Raley et al fails to disclose the utilization of a stability control agent.

U. S. Patents Nos. 4,370,378 and 4,387,169 (Zabrocki et al) disclose polyethylene foams alleged to have densities of 17,6 to 30.1 kg/m³. The Zabrocki et al patents assert that the low densities are achievable by special mixing procedures. There is no disclosure in these patents of using an elastomer, a stability control agent or isobutane. To the contrary, the patents urge the use of ozone-depleting blowing agents such as the CFCs.

U. S. Patents Nos. 4,640,933, 4,663,361 and 4,694,027 (Park) disclose polyolefin foams having densities between 35,1 kg/m³ and 42,6 kg/m³ but fail to disclose polyolefin foams of lower densities or the use of an elastomer or the achievement of densities as low as about 14,4 kg/m³.

U. S. Patent No. 4,652,590 (Hoki et al) discloses the manufacture of low density polyethylene foams using CFC blowing agents. The patent fails to disclose the use of an elastomer or a stability control agent or isobutane as blowing agent.

U. S. Patents Nos. 3,893,957, 4,721,591, 4,738,810 and 4,824,720 each disclose the manufacture of polyolefin foams but fail to disclose the use of isobutane or other hydrocarbon blowing agent or the use of stability control agents.

U. S. Patent No. 4,379,859 (Hirosawa et al) discloses prefoamed particles of polypropylene produced by dispersing the resin particles in water followed by release into the atmosphere and drying.

### SUMMARY OF THE INVENTION

A low density polyethylene foam is desirable as cushioning material due to its greater economy over standard density (35.2 kg/m³) materials. Previously, the lowest density commercialized foam of relatively large cross-sectional area has had a density of approximately 22,4 kg/m³. It is possible to take polyethylene and add enough blowing agent to get the density down to approximately 19,2 kg/m³ but the resulting foam develops surface corrugations, ripples, warping or other undesirable characteristics. Any attempt to add more blowing agent beyond this point leads to a foam that does not have sufficient melt strength to support its own weight, i.e., the foam collapses on itself after extrusion. The addition of an elastomer gives sufficient elasticity to permit the addition of enough blowing agent so that densities of 14,4 to 17,6 or 19,2 kg/m³ can be achived.

As can be seen from a review of the above-noted prior art, although providing many beneficial properties, the previously-known foamed plastics have failed to provide a foamed material with densities as low as about 14,4 kg/m³ which is produced with hydrocarbon blowing agents (e.g., butane or isobutane) that do not deplete the ozone layer in the upper atmosphere. By mixing low density polyethylene (hereinafter "LDPE"), and an elastomer, such as, styrene-butadiene rubber (hereinafter "SBR") with an appropriate blowing agent, the present inventor has found that it is possible to make a foamed article of large cross-sectional area with a much lower density than has been previously achieved on a production basis. The foams of this invention are uncrosslinked and are comprised of predominantly closed cells having an average cell diameter of 0,06 to 0,25 centimeter , preferably 0,07 to 0,11 centimeter . The densities of foams made according to this invention are consistently in the range of 14,4 to 40 kg/m³ preferably from 24 to 36,8 or 17,6 to 19,2 kg/m³. The foams produced according to this invention are substantially free of surface corrugations, ripples, warping, gas spots, and other undesirable characteristics.

This invention relates to the production of elongated low density thermoplastic cellular bodies which can be several centimeters wide or, from less than one centimeter to several centimeters thick, and up to several decimeters long for use in such applications as building insulation purposes, flotation or buoyancy applications, packaging and for such diverse other uses as large art forms, floating pool toys, oil spill flotation containment gear. The present invention provides solutions to the problems described hereinabove in relation to the prior art and provides a relatively low cost means for producing quantities of large size, low density thermoplastic cellular products with a minimum of capital expenditure.

It is therefore a principal object of this invention to provide for the production of low density, large size thermoplastic polymer foams.

It is another object to provide for the production of large size, low density thermoplastic foams capable of periodic high rates of production such as 1814 to 3176 or more kilograms per hour of high quality, uniformly dimensioned, unwarped, large size, low density thermoplastic foam having a density as low as 14,4 kg/m³.

It is a further object of this invention to provide means whereby large size, low density thermoplastic polymer foams can be produced having substantially uniform structural characteristics from end to end and being substantially free of non-uniform areas which require trimming away waste such as result from corrugations or ripples on the foam or warping of the foam.

The present invention solves the prior art problems and achieves the objects as disclosed hereinabove by the steps of forming a mixture of a thermoplastic polymer, a synthetic elastomer, a stability control agent and a hydrocarbon blowing agent and cooling the resulting foamable mixture to a temperature at which the viscosity of the mixture is adequate to retain the blowing agent when the mixture is subjected to lower pressure and is allowed to expand. After cooling, the foamable mixture is extruded into a holding zone maintained at a temperature and pressure that prevents foaming in the holding zone. The holding zone has an outlet die having an orifice opening into a zone of lower pressure such as atmospheric pressure at which said foamable mixture foams and means for closing said orifice, said means being openable to allow the foamable mixture to be ejected from said holding zone. In addition, a movable ram forces the foamable mixture out of the holding zone through said die orifice at a rate greater than that at which substantial foaming in the die orifice occurs and less than that at which melt fracture occurs, i.e., less than that at which substantial irregularities in cross-sectional area or shape of cellular body being formed occurs. Upon passing through the die orifice into the zone of lower pressure, the foamable mixture is allowed to expand unrestrained in at least one dimension to produce the desired large size, low density thermoplastic foam having a density as low as 14,4 kg/m³ or 16 kg/m³ or 17,6 kg/m³ or as high as 36,8 kg/m³ or 40 kg/m³ and being relatively free of surface corrugations, ripples, warping or substantial cell collapse.

### DETAILED DESCRIPTION OF PREFERRED EMBODIMENTS

Thermoplastic polymers usable in the present invention include olefin polymer resins such as high, medium and low density, polyethylene, polypropylene, polyvinylchloride, and any other thermoplastic suitable for use in manufacturing thermoplastic foams. Polyolefins suitable for use in the practice of the present invention include ethylene homopolymers such as low, medium, or high density polyethylene, and ethylene copolymers such as ethylene-vinyl acetate copolymers, ethylene-1-butene copolymers, ethylene-butadiene copolymers, ethylene-vinyl chloride copolymers, ethylene-methyl methacrylate copolymers, ethylene-acrylonitrile copolymers, ethylene-acrylic acid copolymers. As the olefin polymer resin, it is preferable to use an ethylene homopolymer or a copolymer having an ethylene content of at least 50 percent by weight, preferably 75 percent by weight. Such additional polymers are well known is the prior art and are disclosed in the above-mentioned prior art patents and such disclosures are incorporated herein by reference.

Suitable elastomers for use in this invention include random styrene-butadiene rubber, natural rubber, butadiene rubber, isobutylene rubber, ethylene-propylene rubber (EPR), diene-modified ethylene-propylene rubber (EPDM) containing bound diene units derived from 1,4-hexadiene, dicyclopentadiene, ethylidene norbornene acrylonitrile rubber, acrylonitrile-butadiene copolymer rubber, styrene-butadiene block copolymer rubber, poly(2-chlorobutadiene-1,3), synthetic polyisoprene, chlorinated copolymers of isobutylene and chlorosulfonated polyethylene Diene elastomers that is, synthetic elastomers derived from dienes, are preferred. An example of a suitable commercially available elastomer is Stereon 840A, a styrene-butadiene block copolymer sold by Firestone Synthetic Rubber & Latex Company.

Stability control agents suitable for use in the present invention inciude the partial esters of long-chain fatty acids with polyols described in U. S. Patent No. 3,644,230, as well as higher alkyl amines, fatty acid amides and complete esters of higher fatty acids such as those described in Watanabe et al, U. S. Patent No. 4,214,054 incorporated herein by reference. Kemamide (trademark) S-180 stearyl stearamide stability control agent is one example of a suitable fatty acid amide stability control agent. Kemamide S-180 is commercially available from Humko Chemical Division of Witco Chemical Corp. The partial esters of fatty acids which are used in this invention are members of a generic class known as surface active agents or surfactants. Exemplary surfactants in the class of useful additives include, for example, glyceryl monostearate, glyceryl distearate, mixtures of these mono- and diglycerides, glyceryl monobenzoate, sorbitan mono-, di-, and trioleates, and mono- and diglycerides of oleic acid and palmitic acid, inter alia. Pationic 1052 sold by Patco Polymer Additives Division of American Ingredients Company and Atmos 150 sold by the Atlas Powder Company are examples of suitable glyceryl monostearates that are commercially available. Each of these products contain predominantly glyceryl monostearate which may also contain some very small amounts of glyceryl distearate. For ease of handling, the stability control agent is conveniently blended into the olefin polymer, e.g., LDPE, which is then formed into pellets for feeding into the feed hopper of the extruder. In addition to, or in place of, the foregoing stability control agents, there may also be employed for such purpose copolymers of α-olefins with various monoethylenically unsaturated carboxylic acids such as those described in Park, U. S. Patent No. 4,347,329 or copolymers of α-olefins neutralized carboxyl-group bearing moieties which are commonly referred to in the art as ionomers. Typically, such olefinically unsaturated carboxylic acid copolymers may be employed in an amount ranging from 5 to 95% by weight of the olefin polymer employed.

Isobutane is the most preferred blowing agent for use in this invention. However, other hydrocarbon blowing agents having 1 to 6 carbon atoms and a boiling point of -175°C. to 50°C. can be used. For example, suitable hydrocarbon blowing agents include n-propane, ethane, methane, propylene, n-butane, butylene, n-pentane, neopentane, 2-methylbutane, 2,2-dimethylbutane, 2,3-dimethylbutane, n-hexane .

In addition to the hydrocarbon blowing agent, the olefin polymer employed in this invention can, and usually will, contain other additives for other purposes. For example, hydrocarbon polymers usually contain a small amount of a heat or light stabilizer and an antioxidant to prevent degradation during processing. Pigments, plasticizers, nucleating agents, wetting agents and mixing aids are also frequently employed. The process is operable with any of such aids in the customary quantities. For example, known nucleating (or cell-size controlling) agents include talc, clay, mica, diatomaceous earth, silica, titanium oxide, zinc oxide, calcium silicate, metallic salts of fatty acids such as barium stearate, zinc stearate, aluminum stearate, sodium bicarbonate with or without citric acid, etc. The nucleating agents are usually finely divided and are conveniently used as pellets made from 20 wt. % nucleating agent blended into LDPE or other olefin polymer.

The amount of elastomer used in the present invention cart be varied in the range of 3 to 30 wt. parts, preferably to 15 wt. parts, per 100 wt. parts of olefin polymer resin. The amount of stability control agent used in this invention can be varied from 05 wt. part to 10 wt. parts, preferably 1 wt. part to 5 wt. parts per 1001 wt. parts of olefin polymer resin. The amount of nucleating agent employed in the present invention can be varied from 0.02 wt. part to 5 wt. parts, preferably 0.3 wt. part to 3 wt. parts, per 100 wt. parts of olefin polymer resin. The amount of hydrocarbon blowing agent employed in this invention can be varied depending upon the density desired for the ultimate foam. For example, from 1 to 50 wt. parts, preferably 5 to 40 wt. parts, of the blowing agent per 100 wt. parts of the olefin polymer resin can be used.

In carrying out the method of this invention, the thermoplastic polymer, elastomer, and other additives, usually in the form of granules, pellets or coarse powder are added to the extruder through the hopper and heated and masticated in the mixing zone of the extruder in the usual way to produce a heat-plastified molten mass of thermoplastic being mixed and advanced through the extruder. The stability control agent is typically pre-blended into a portion of the thermoplastic and the resulting pre-blend is formed into pellets which are fed into the feed hopper with the major part of the thermoplastic granules, pellets or coarse powder. The temperatures necessary for producing the molten thermoplastic mass in the extruder are well known and fall in the range of 176°C to 249°C, higher or lower, depending upon the particular type of thermoplastic being used.

Preferably, at an intermediate point along the extruder, the hydrocarbon blowing agent which has a plasticizing effect, is pumped into the molten thermoplastic mass and mixed therewith as the resulting mixture is advanced through the extruder. The plasticizing action of the blowing agent enables cooling of the molten mixture of thermoplastic mass and blowing agent as it is forwarded in the forward end of the extruder.

The cooling of the molten foamable mixture of thermoplastic mass and blowing agent is important in order to enable the mixture to foam when it is ejected into the zone of lower pressure to retain the blowing agent. This avoids loss of blowing agent and resultant collapse of the cellular structure due to the inability of the molten polymer to retain the blowing agent within the cells formed by the expansion of the blowing agent. If the temperature of the foamable mixture ejected into the lower (e.g., atmospheric) pressure zone is too high, the thermoplastic polymer portion of the mixture is too fluid, i.e., lacks sufficient viscosity to retain the blowing agent within the mixture or cells formed by expansion of the blowing agent. The optimum temperature range to which the foamable mixture is cooled varies depending upon the type of thermoplastic in the mixture and on other variables such as the type and amount of blowing agent. For example, the optimum temperature range of the foamable mixtures leaving the extruder (for low density polyethylene) is 82°C to 121°C, preferably 98°C to 116°C, although higher or lower temperatures may be employed.

The foamable mixture cooled to a temperature for example, in the preferable range of 98°C to 116°C is introduced into the holding zone of an accumulator such as that described in U. S. Patent No. 4,323,528 (Collins) incorporated herein by reference. The holding zone is maintained at a temperature (e.g. 85°C to 113 °C and pressure (e.g., 1 378 952 Pa to 4 826 332 Pa) which does not allow the foamable mixture to foam. The holding zone is formed with an outlet die having an orifice which opens into a zone of lower pressure, for example, the atmosphere. The die orifice is preferably externally closable by a gate which is movable externally of the holding zone to open and close the die orifice. The movement of the gate does not, in any way, disturb or otherwise physically affect the foamable mixture within the holding zone other than to release it to the atmosphere when opened.

The ejection rate, i.e., the time necessary to empty the holding chamber of the accumulator can be varied widely. Ejection rates of 1360 to 8165 kilograms per hour (kg/h), preferably 1814 kg/h to 3176 kg/h can be used. Ejection rates are dependent on many actors such as the type of thermoplastic polymer being employed, the type and amount of blowing agent employed, the amount of nucleation, i.e. nucleating agents, employed, the presence or absence of other extrusion aiding additives, the temperature of the molten foamable mixture, the pressure under which it is stored in the holding chamber, the force and speed with which the ram is moved, and the size and configuration of the die orifice. The optimum rate of ejection to produce the desired cellular body having the desired characteristics and size can be readily arrived at for any particular composition of molten foamable mixture and any particular equipment by making a few runs and increasing or decreasing the rate of ejection to produce the desired cellular body.

The molten foamable mixture begins to expand as soon as it leaves the die orifice of the accumulator and enters the zone of lower pressure, e.g., the atmosphere. The cellular body preferably is supported by means of a conveyor system of some type, e.g., conveyor belt, or conveyor rollers, from the time that ejection is begun until ejection is terminated. The ejected foaming molten mixture continues to expand throughout the entire ejection operation which normally takes from less than one second to several seconds and continues to expand even after the ejection operation has been completed. The expansion of the cellular body continues for a few to several minutes after ejection is completed indicating the body is still deformable and when it is in an expanding or deformable condition it can be further shaped, for exammple, by transfer molding or simply by altering one or more or all surfaces of the expanding cellular body. After a period of time the cellular body ceases to expand any further which indicates that cooling has taken place to the extent that the body is no longer totally deformable. Since the cellular body by its nature is a heat insulator, the internal portions remain hot and may remain deformable for a considerable period of time after the outer areas have congealed and are no longer deformable without the application of more heat

While the hot cellular body is totally still in deformable condition, it can be shaped by molding, for example, while it is still in the hot deformable condition, the cellular body can be disposed between two mold halves which are brought together to contact the outer surface of the cellular body. Because the cellular body is still expanding, it expands into contact with the mold surfaces which shape the body. As an example, surfing boards, can be produced from a flat or plank shaped cellular body by bringing appropriately shaped mold halves together on the body while the body is still expanding. Typically, ejection requires 1 second to 10 seconds to be completed from opening of the die orifice gate to closing the die orifice gate.

The thermoplastic cellular bodies produced by this invention are of very low density, of 14,4 kg/m³ to 40 kg/m³, preferably of 24 kg/m³ to 36,8 kg/m³ or from 17,6kg/m³ to 19,2kg/m³. The cellular bodies produced by the present invention are of substantially consistent cross-section throughout their lengths. The lengths of such bodies can be varied as desired from a few decimeters such as 6,9 or 12 up to many decimeters, such as 36,5; 73; 146,3 or more decimeters depending upon the size and capacity of the equipment used especially the size of the die opening and the capacity of the holding chamber. In addition, the cellular bodies produced by this invention have a closed cellular structure covered with a thin membrane and have substantially uniform low densities, cell size, K-factor and resiliency along the length of the body when such bodies are ejected and are allowed to expand freely. Furthermore, the cellular bodies of this invention are capable of being produced with consistently uniform properties such as are described above from run to run in commercial production equipment.

The cellular bodies produced by this invention can be in the form of cylinders, planks, panels and can be formed with cross-sections that are circular, flat, rectangular, arched or curved, right angled, square, triangular, S-shaped, T-shaped, X-shaped, or any other desirable shape by selecting a die orifice capable of producing the desired cross-sectional shape.

The cellular bodies of this invention are very light in weight and are highly useful as cushioning materials in packaging delicate goods such as computers, glassware, electronic equipment, such as TV sets, receivers, VCR's and the like, furniture, and any article that needs to be protected from shock, gouging or surface-scratching or marring. Additionally, the cellular bodies of this invention find use in many other applications as described in the above-mentioned Collins patent.

### EXAMPLES 1 THROUGH 3 AND COMPARATIVE EXAMPLES A THROUGH E

In each of Examples 1 through 3, a low density polyethylene resin (LDPE) having a melt index of about 2 (ASTM D 1238) and a density of about 0.918 (ASTM D 792) was blended with a styrene-butadiene rubber (SBR) having about 43 wt. % bound styrene, a melt index (Cond. G, 200°C., 5 kg) of 2.10⁻⁴kg/s (ASTM D 1238) and a number average molecular weight, M_{n,} of 60,000 and a weight average molecular weight, M_{w,} of about 85,000 (sold by Firestone Synthetic Rubber & Latex Company under the designation STEREON 840A); glyceryl monostearate (GMS) (Pationic 1052, a mixture of glyceryl mono- and di- stearates, very predominantly glyceryl monostearate) as stability control agent; and diatomaceous earth (DE) as nucleating agent. The proportions of these ingredients are listed in Table I. In Examples A through E the proportions of LDPE, GMS and DE as listed in Table I were blended. The resulting mixture in each of Examples 1 through 3 and A through E was fed into the feed section of an extruder having a L:D ratio of 48:1. The feed section temperature was maintained at 160°C. The mixture was then passed into the mixing zone of the extruder where the temperature was maintained at a temperature of about 196°C. The respective amount of isobutane (IB) listed in Table I was injected into the mixture in the mixing zone in each case and the resulting mixture was then passed into a cooling zone maintained at about 82°C. This temperature profile resulted in a melt temperature (of foamable plastic mass leaving the extruder) of about 104°C.

In each example the resulting foamable mixture was passed from the extruder into an accumulator such as that described in U. S. Patent 4,323,528. The accumulator was maintained at a temperature of about 99°C and a pressure of about 2 068 428 Pa which was adequate to maintain the mixture in foamable condition. When the desired amount of foamable mixture (roughly 7374,19 cubic centimeters) filed the accumulator, the movable ram of the accumulator was actuated to eject the foamable mixture into the atmosphere at the rate of 2268 kilograms per hour through a die to form a foamed plank approximately 5,08 centimeters × 60,96 centimeters × 548,64 centimeters.

In each example the resulting foam was analyzed for density in kilograms per cubic meter kg/m³, and the respective densities are set forth in Table I. In addition, the 25% compressive strength in Pascal, Pa, (pursuant to ASTM D 3575 - 84, Suffix D, paras. 17 through 23) and compressive set in percent (pursuant to ASTM D 3575 - 84, Suffix B, paras. 10 through 16) were measured and the results are given in Table I. In addition, the thermal stability was measured (pursuant to ASTM D 3575 - 84, Suffix S, paras. 33 through 39) and the extent of change in the cross machine direction (CMD), in the machine direction (MD) and thickness measured in percent are given for each example in Table I. The minus sign indicates shrinkage. In addition, the sum of each of the CMD, MD and Thickness percentages of shrinkage is presented in each example in Table I.

It is readily seen from the results given in Table I that the thermal stability of the foam produced pursuant to the present invention at densities of about 34,42kg/m³ and about 15,2 kg/m³ are far superior to the foams produced at comparable densities without the addition of SBR. For example, compare Example 1 with Example A respecting foams at a density of about 34,42 kg/m³. In addition, the thermal stability of the foam produced in Example 3 pursuant to this invention at a density of 15,2kg/m³ was far superior to the thermal density of Example C foam produced at 15,2kg/m³. Furthermore, the Example C foam had a corrugated surface and was not suitable as a production process or foam.

The die cutting properties given in Table I were determined by the use of a rectangular die cutter of 27,94 centimeters × 58,42 centimeters. The blades of the die cutter were mounted in a 1,57 centimeters piece of plywood such that 0,79 centimeter of the blade extend from the surface of the plywood. In conducting the die cutting test, a 5,08 centimeters thick piece of foam test specimen was placed between the die cutter and a die cutting bed and the die cutter was moved towards the bed until the blade cuts through the foam specimen and barely contacts the bed. Thereby, the 5,08 centimeters test specimen was compressed down to about 0,79 centimeter thickness during die cutting. After die cutting, the specimen was removed and allowed to stand unrestrained for about 24 hours after which measurements of thickness and width were made. The results given in Table I show that the foam of Example 1 made according to the invention expanded in its original 5,08 centimeters thickness by only 0,07 centimeter whereas the thickness of the foam produced by Example A had twice the expansion of thickness, that is, 0,15 centimeter. Similary, the width of the foam produced in Example 1 according to the invention shrank by 0,15 centimeter whereas the width of the Example A foam shrank about twice that, namely 0,3 centimeter.

These examples illustrate the superiority of foamed products made pursuant to the present invention in the density range of 14,4 to 40 kg/m³.

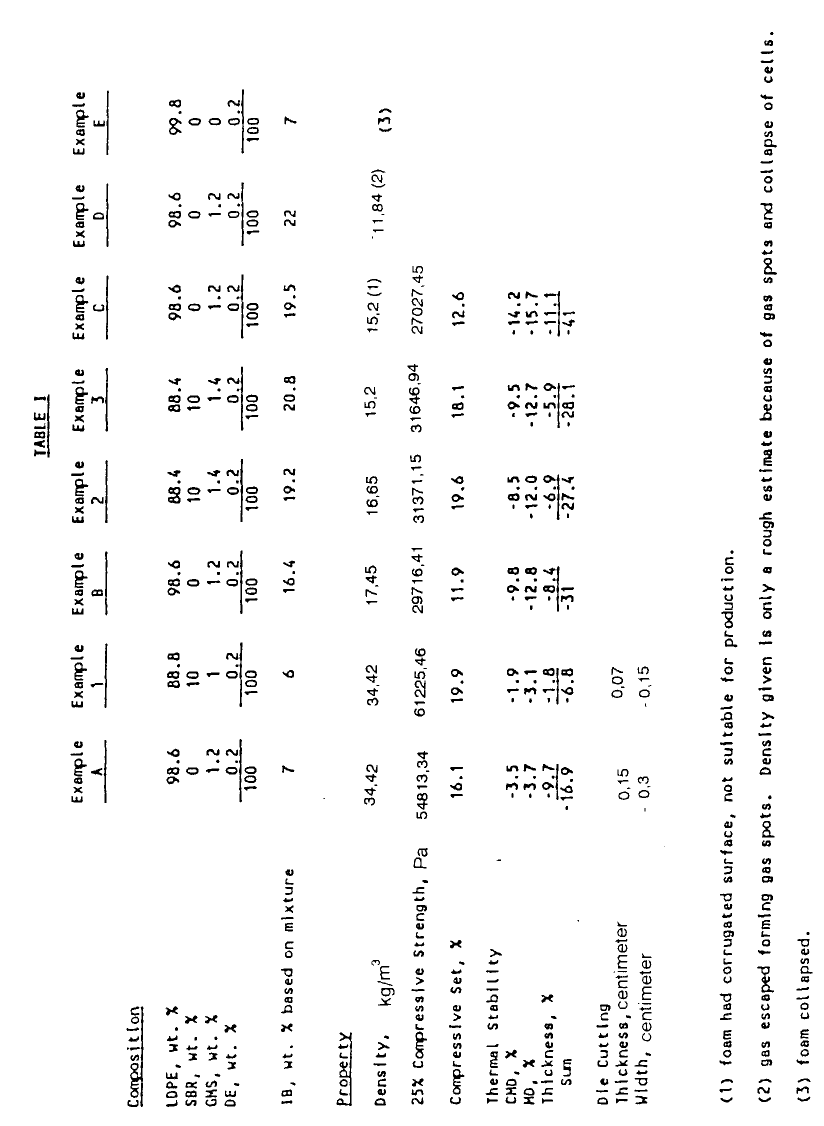

## Claims

1. A polyolefin foam having a density of 14,4 to 40 kilograms per cubic meter comprising (1) an olefin polymer resin selected from the group consisting of ethylene homopolymers and copolymers of ethylene and a copolymerizable monomer; (2) an elastomer selected from the group including random styrene-butadiene rubber, natural rubber, butadiene rubber, isobutylene rubber, ethylene-propylene rubber (EPR), diene-modified ethylene-propylene rubber (EPDM) containing bound diene units derived from 1,4-hexadiene, dicyclopentadiene, ethylidene norbornene, acrylonitrile rubber, acrylonihile-butadiene, copolymer rubber, styrene-butadiene block copolymer rubber, poly (2-chlorobutadiene-1,3), synthetic polyisoprene, chlorinated copolymers of isobutylene, and chlorosulfonated polyethylene, in an amount of 3 to 30 wt. parts per 100 wt. parts of said olefin polymer resin; (3) a stability control agent selected from the group consisting of partial esters of long chain fatty acids with polyols, higher alkyl amines, fatty acid amides, and olefinically unsaturated carboxylic acid copolymers, and (4) a hydrocarbon blowing agent having from 1 to 6 carbon atoms and a boiling point between -175°C. and 50°C.

2. The foam of claim 1 in which said olefin polymer resin is low density polyethylene.

3. The foam of claim 2 in which said blowing agent is isobutane.

4. The foam of claim 3 in which said stability control agent is glyceril monostearate, glyceryl destearate or mixtures thereof.

5. The foam of claim 3 in which said elastomer is a styrene-butadiene rubber.

6. The foam of claim 5 in which said styrene-butadiene rubber is a block copolymer containing 23 wt.% to 75 wt.% of bound styrene.

7. The foam of claim 3 in which the amount of said elastomer is in the range of 5 to 15 wt. parts per 100 wt. parts of said olefin polymer resin.

8. A foamable composition for producing a polyolefin foam having a density of 14,4 to 40 kilograms per cubic meter comprising a heat-plastified mixture comprising (1) an olefin polymer resin selected from the group consisting of ethylene homopolymers and copolymers of ethylene and a copolymerizable monomer, and (2) an elastomer selected from the group including random styrene-butadiene rubber, natural rubber, butadiene rubber, isobutylene rubber, ethylene-propylene rubber (EPR), diene-modified ethylene-propylene rubber (EPDM) containing bound diene units derived from 1,4-hexadiene, dicyclopentadiene, ethylidene norbornene, acrylonitrile rubber, acrylonitrile-butadiene, copolymer rubber, styrene-butadiene block copolymer rubber, poly (2-chlorobutadiene-1,3), synthetic polyisoprene, chlorinated copolymers of isobutylene, and chlorosulfonated polyethylene, in an amount of 3 to 30 wt. parts per 100 wt. parts of said olefin polymer resin; (3) a stability control agent selected from the group consisting of partial esters of long chain fatty acids with polyols, higher alkyl amines, fatty acid amides, and olefinically unsaturated carboxylic acid copolymers, and (4) a hydrocarbon blowing agent having from 1 to 6 carbon atoms and a boiling point between -175°C. and 50°C., said heat-plastified mixture being at a temperature and a pressure which does not allow said mixture to expand.

9. The foamable composition of claim 8 in which said olefin polymer resin is low density polyethylene.

10. The foamable composition of claim 9 in which said blowing agent is isobutane.

11. The foamable composition of claim 10 in which said stability control agent is glyceryl monostearate, glyceryl distearate or mixtures thereof.

12. The foamable composition of claim 10 in which said elastomer is a styrene-butadiene rubber.

13. The foamable composition of claim 12 in which said styrenebutadiene rubber is a block copolymer containing 23 wt.% to 75 wt.% of bound styrene.

14. The foamable composition of claim 10 in which the amount of said elastomer is in the range of 5 to 15 wt. parts per 100 wt. parts of said olefin polymer resin.

15. A process for producing a polyolefin foam having a density of 14,4 to 40 kilograms per cubic meter comprising (a) mixing and heat plastifying (1) ) an olefin polymeresin selected from the group consisting of ethylene homopolymers and copolymers of ethylene and a copolymerizable monomer, and (2) an elastomer selected from the group including random styrene-butadiene rubber, natural rubber, butadiene rubber, isobutylene rubber, ethylene-propylene rubber (EPR), diene-modified ethylene-propylene rubber (EPDM) containing bound diene units derived from 1,4-hexadiene, dicyclopentadiene, ethylidene norbornene, acrylonitrile rubber, acrylonitrile-butadiene copolymer rubber, styrene-butadiene block copolymer rubber, poly (2-chlorobutadiene-1,3), synthetic polyisoprene, chlorinated copolymers of isobutylene, and chlorosulfonated polyethylene, in an amount of 3 to 30 wt. parts per 100 wt. parts of said olefin polymer resin; (b) admixing the resulting heat plastified mixture with (3) a stability control agent selected from the group consisting of partial esters of long chain fatty acids with polyols, higher alkyl amines, fatty acid amides, and olefinically unsaturated carboxylic acid copolymers, and (4) a hydrocarbon blowing agent having from 1 to 6 carbon atoms and a boiling point between -175°C. and 50°C.; and ( c ) activating said blowing agent to foam the resulting admixture to a substantially closed cell polyolefin foam having a density of 14,4 to 40 kilograms per cubic meter.

16. The process of claim 15 in which said olefin polymer is low density polyethylene.

17. The process of claim 16 in which said blowing agent is isobutane.

18. The process of claim 17 in which said stability control agent is glyceryl monostearate, glyceryl distearate or mixtures thereof.

19. The process of claim 17 in which said elastomer is a styrene-butadiene rubber.

20. The process of claim 19 in which said styrene-butadiene rubber is a block copolymer containing 23 wt. % to 75 wt. % of bound styrene.

21. The process of claim 17 in which the amount of said elastomer is in the range of 5 to 15 wt. parts per 100 wt. parts of said olefin polymer resin.

## Patentansprüche

1. Polyolefinschaum mit einer Dichte von 14,4 bis 40 Kilogramm pro Kubikmeter, der (1) ein Olefinpolymerharz ausgewählt aus der Gruppe bestehend aus Ethylen-Homopolymeren und Copolymeren von Ethylen und einem copolymerisierbaren Monomer; (2) ein Elastomer ausgewählt aus der Gruppe, die einen per Zufall gewählten Styren-Butadien-Kautschuk, natürlichen Kautschuk, Butadien-Kautschuk, Isobutylen-Kautschuk, Ethylen-Propylen-Kautschuk (EPR), dien-modifizierten Ethylen-Propylen-Kautschuk (EPDM), welcher gebundene Dien-Einheiten entstanden aus 1,4-Hexadien, Dicyclopentadien, Ethyliden-Norbornen enthält, Acrylonitril-Kautschuk, Acrylonitril)Butadien, Ccpolymer-Kautschuk, Styren-Butadien Blockcopolymer-Kautschuk, Poly(2-Chlorobutadien-1,3), synthetisches Polyisopren, chlorierte Coploymere von Isobutylen, und chlorsulfonierte Polyethylene, in einer Menge von 3 bis 30 Gewichtsprozentanteilen von besagtem Olefin-Polymerharz; (3) ein Agens zur Stabilitätskontrolle ausgewählt aus der Gruppe bestehend aus teilweise mit Polyolen veresterten langkettigen Fettsäuren, höher alkylierten Aminen, Fettsäureamiden, und olefinisch ungesättigten Carbonsäure-Copolymeren, und (4) ein Kohlewasserstoff-Treibmittel mit 1 bis 6 Kohlenstoffatomen und einem Siedepunkt, der zwischen -175°C und 50°C liegt, umfasst.

2. Schaum nach Anspruch 1, bei dem das Olefinpolymerharz ein Polyethylen mit geringer Dichte ist.

3. Schaum nach Anspruch 2, bei dem das Treibmittel Isobutan ist.

4. Schaum nach Anspruch 3, bei dem das Agens zur Stabilitätskontrolle aus Glycerol-Monostearat, Gycerol-Distearat oder Mischungen derselben besteht.

5. Schaum nach Anspruch 3, bei dem das Elastomer ein Styren-Butadien-Kautschuk ist.

6. Schaum nach Anspruch 5, bei dem der Styren-Butadien-Kautschuk ein Blockcopolymer mit 23 bis 30 Gewichtsprczentanteilen an gebundenem Styren ist.

7. Schaum nach Anspruch 3, bei dem die Menge an Elastomer im Bereich von 5 bis 15 Gewichtsprozentanteilen des Olefin-Polymerharzes liegt.

8. Aufschäumbare Mischung zur Herstellung eines Polyolefinschaumes mit einer Dichte von 14,4 bis 40 Kilogramm pro Kubikmeter, die eine wärme-plastifizierte Mischung umfasst, welche beinhaltet:
(1) ein Olefinpolymerharz ausgewählt aus der Gruppe bestehend aus Ethylen-Homopolymeren, und Copolymeren von Ethylen und einem copolymerisierbaren Monomer, und
(2) ein Elastomer ausgewählt aus der Gruppe, die per Zufall gewählte Styren-Butadien-Kautschuk, natürlichen Kautschuk, Butadien-Kautschuk, Isobutylen-Kautschuk, Ethylen-Propylen-Kautschuk (EPR), dienmodifizierten Ethylen-Propylen-Kautschuk (EPDM), welcher gebundene Dien-Einheiten entstanden aus 1,4-Hexadien, Dicyclopentadien, Etyliden-Norbornen enthält, Acrylonitril-Kautschuk, Acrylonitril-Butadien, Copolymer-Kautschuk, Styren-Butadien Blockcopolymer-Kautschuk, Poly(2-Chloro-Butadien-1,3), synthetisches Polyisopren, chlorierte Copolymere von Isobutylen und chlorsulfonierte Polyethylene enthält, in einer Menge von 3 bis 30 Gewichtsprozentanteilen des Olefinpolymerharzes;
(4) ein Kohlenwasserstoff-Treibmittel mit 1 bis 6 Kohlenstoffatomen und einem Siedepunkt, der zwischen -175°C und 50°C liegt, wobei die wärme-plasitfizierte Mischung bei einem Druck und einer Temperatur gehalten wird, die der Mischung nicht erlaubt, sich auszudehnen.

9. Aufschäumbare Mischung nach Anspruch 8, bei der das Olefin-polymerharz ein Polyethylen mit geringer Dichte ist.

10. Aufschäumbare Mischung nach Anspruch 9, bei der das Treibmittel Isobutan ist.

11. Aufschäumbare Mischung nach Anspruch 10, bei der das Agens zur Stabilitätskontrolle aus Glycerol-Monostearat, Glycerol-Distearat oder Mischungen derselben besteht.

12. Aufschäumbare Mischung nach Anspruch 10, bei der das Elastomer ein Styren-Butadien-Kautschuk ist.

13. Aufschäumbare Mischung nach Anspruch 12, bei der der Styren-Butadien-Kautschuk ein Blockcopolymer mit 23 bis 75 Gewichtsprozentanteilen an gebundenem Styren ist.

14. Aufschäumbare Mischung nach Anspruch 10, bei der die Menge an Elastomer im Bereich von 5 bis 15 Gewichtsprozentanteilen des Olefinpolymerharzes liegt.

15. Verfahren zur Herstellung eines Polyolefinschaumes mit einer Dichte von 14,4 bis 40 Kilogramm pro Kubikmeter, der folgende Schritte umfasst:
(a) Mischen- und Wärme-Plastifizieren (1) eines Olefinpolymerharzes ausgewählt aus der Gruppe bestehend aus Ethylen-Homopolymeren und Copolymeren von Ethylen und einem copolymerisierbaren Monomer, und (2) eines Elastomeres ausgewählt aus der Grupe, die einen per Zufall gewählten Styren-Butadien-Kautschuk, natürlichen Kautschuk, Butadien-Kautschuk, Isobutylen-Kautschuk, Ethylen-Propylen-Kautschuk (EPR), dien-modifizierten Ethylen-Propylen-Kautschuk (EPDM), welcher gebundene Dien-Einheiten entstanden aus 1,4-Hexadien, Dicyclopentadien, Ethyliden-Norbornen enthält, Acrylonitril-Kautschuk, Acrylonitril-Butadien, Copolymer-Kautschuk, Styren-Butadien Blockcopolymer-Kautschuk, Poly(2-Chlorobutadien-1,3), synthetisches Polyisopren, chlorierte Copolymere von Isobutylen, und chlorsulfornierte Polyethylene, in einer Menge von 3 bis 30 Gewichtsprozentanteilen des Olefin-Polymerharzes;
(b) Beimischen zu der resultierenden wärme-plastifizierten Mischung von (3) einem Agens zur Stabilitätskontrolle ausgewählt aus der Gruppe bestehend aus teilweise mit Polyolen veresterten langkettigen Fettsäuren, höher alkylierten Aminen, Fettsäureamiden, und olefinisch ungesättigten Carbonsäure-Copolymeren, und (4) einem Kohlewasserstoff-Treibmittel mit 1 bis 6 Kohlenstoffatomen und einem Siedepunkt, der zwischen -175°C und 50°C liegt; und
(c) Aktivieren des Treibmittels, um die resultierende Beimischung zu einem im Wesentlichen geschlossenzelligen Polyolefinschaum mit einer Dichte von 14,4 bis 40 Kilogramm pro Kubikmeter aufzuschäumen.

16. Verfahren nach Anpsruch 15, bei dem das Olefinpolymer ein Polyethylen mit geringer Dichte ist.

17. Verfahren nach Anspruch 16, bei dem das Treibmittel Isobutan ist.

18. Verfahren nach Anspruch 17, bei dem das Agens zur Stabilitätskontrolle aus Glycerol-Monostearat, Glycerol-Distearat oder Mischungen derselben besteht.

19. Verfahren nach Anspruch 17, bei dem das Elastomer ein Stryren-Butadien-Kautschuk ist.

20. Verfahren nach Anspruch 19, bei dem das Styren-Butadien-Kautschuk ein Blockcopolymer mit 23 bis 75 Gewichtsprozentanteilen von gebundenem Styren ist.

21. Verfahren nach Anspruch 17, bei dem die Menge an Elastomer in einem Bereich von 5 bis 15 Gewichtsprozentanteilen des Olefinpolymerharzes liegt.

## Revendications

1. Mousse de polyoléfine ayant une densité de 14,4 à 40 kilogrammes par mètre cube, comprenant (1) une résine polymère oléfine choisie parmi le groupe consistant en des homopolymères éthylène et des copolymères d'éthylène et un monomère copolymérisable; (2) un élastomère choisi parmi le groupe incluant du caoutchouc styrène-budadiène tout venant, du caoutchouc naturel, du caoutchouc butadiène, du caoutchouc isobutylène, du caoutchouc éthylène-propylène (EPR), du caoutchouc éthylène-propylène diène modifié (EPDM) contenant des unités diènes liées dérivées de 1,4-hexadiène, dicyclopentadiène, éthylidène norbornène, du caoutchouc acrylonitrile, du butadiène acrylonitrile, du caoutchouc copolymère, un bloc de copolymère caoutchouteux, styrène-butadiène, du poly (2-chlorobutadiène-1,3), du polyisoprène synthétique, des copolymères chlorurés d'isobuthylène, et du polyéthylène chlorosulfoné, dans une proportion de 3 à 30 parts en poids, pour 100 parts en poids de ladite résine polymère oléfine; (3) un agent de contrôle de stabilité choisi parmi le groupe incluant des esters partiels acides gras à longue chaîne avec des polyoles, des amines alkyles élevées, des acides amides gras, et des copolymères acides carboniques insaturés en oléofine, et (4) un agent de gonflement hydrocarboné présentant 1 à 6 atomes de carbone et un point d'ébullition entre -175° C et 50° C.

2. Mousse selon la revendication 1, dans laquelle ladite résine polymère oléfine est du polyéthylène à basse densité.

3. Mousse selon la revendication 2, dans laquelle ledit agent de gonflement est de l'isobutane.

4. Mousse selon la revendication 3, dans laquelle ledit agent de contrôle de stabilité est du monostéarate glycéryle, du glycéril distéarate ou un mélange des deux.

5. Mousse selon la revendication 3, dans laquelle ledit élastomère est du caoutchouc styrène-butadiène.

6. Mousse selon la revendication 5, dans laquelle la mousse de styrène-butadiène est un bloc de copolymère contenant 23% à 75% en poids de styrène lié.

7. Mousse selon la revendication 3, dans laquelle la quantité dudit élastomère est comprise entre 5 et 15 parts en poids, pour 100 parts en poids de résine de polymère oléfine.

8. Composition expansible pour produire une mousse polyoléfine, et ayant une densité de 14,4 à 40 kilogrammes par mètre cube, comprenant un mélange plastifié à la chaleur comportant (1) une résine polymère oléfine choisie parmi le groupe incluant une résine polymère oléfine choisie parmi le groupe consistant en des homopolymères éthylène et des copolymères d'éthylène et un monomère copolymérisable, et (2) un élastomère choisi parmi le groupe incluant du caoutchouc styrène-budadiène tout venant, du caoutchouc naturel, du caoutchouc butadiène, du caoutchouc isobutylène, du caoutchouc éthylène-propylène (EPR), du caoutchouc éthylène-propylène diène modifié (EPDM) contenant des unités diènes liées dérivées de 1,4-hexadiène, dicyclopentadiène, éthylidène norbornène, du caoutchouc acrylonitrile, du butadiène acrylonitrile, du caoutchouc copolymère, un bloc de copolymère caoutchouteux, styrène-butadiène, du poly (2-chlorobutadiène-1,3) du polyisoprène synthétique, des copolymères chlorurés d'isobutylène, et du polyéthylène chlorosulfoné, dans une proportion de 3 à 30 parts en poids, pour 100 parts en poids de ladite résine polymère oléfine; (3) un agent de contrôle de stabilité choisi parmi le groupe incluant des esters partiels acides gras à longue chaîne avec des polyoles, des amines alkyles élevées, des acides amides gras, et des copolymères acides carboniques insaturés en oléofine, et (4) un agent de gonflement hydrocarboné présentant 1 à 6 atomes de carbone et un point d'ébullition entre -175° C et 50° C., ledit mélange plastifié à la chaleur étant à une température et une pression qui ne permettent pas la dilatation dudit mélange.

9. Composition expansible selon la revendication 8, dans laquelle ladite résine polymère oléfine est du polyéthylène à basse densité.

10. Composition expansible selon la revendication 9, dans laquelle ledit agent de gonflement est de l'isobutane.

11. Composition expansible selon la revendication 10, dans laquelle ledit agent de contrôle de stabilité est du monostéarate glycéryle, du distéarate glycéryle ou un mélange des deux.

12. Composition expansible selon la revendication 10, dans laquelle ledit élastomère est du caoutchouc styrène-butadiène.

13. Composition expansible selon la revendication 12, dans laquelle ledit caoutchouc styrène-butadiène est un bloc de copolymère contenant 23% à 75% en poids de styrène liée.

14. Compposition expansible selon la revendication 10, dans laquelle la quantité dudit élastomère est comprise entre 5 à 15 parties en poids pour 100 parties en poids de ladite résine polymère oléfine.

15. Procédé pour produire une mousse polyoléfine comportant une densité de 14,4 à 40 kilogrammes par mètre cube consistant (a) à mélanger et plastifier à la chaleur (1) une résine polymère oléfine choisie parmi le groupe incluant des homopolymères éthylène et des copolymères d'éthylène et un monomère copolymérisable, et (2) un élastomère choisi parmi le groupe incluant du caoutchouc styrène-budadiène tout venant, du caoutchouc naturel, du caoutchouc butadiène, du caoutchouc isobutylène, du caoutchouc éthylène-propylène (EPR), du caoutchouc éthylène-propylène diène modifié (EPDM) contenant des unités diènes liées dérivées de 1,4-hexadiène, dicydopentadiène, éthylidène norbornène, du caoutchouc acrylonitrile, du caoutchouc copolymère butadiène acrylonitrile, un bloc de copolymère caoutchouteux styrène-butadiène, du poly (2-chlorobutadiène-1,3), du polyisoprène synthétique, des copolymères chlorurés d'isobutylène, et du polyéthylène chlorosulfoné, dans une proportion de 3 à 30 parts en poids, pour 100 parts en poids de ladite résine polymère oléfine; (b) à mélanger le mélange résultant plastifié à la chaleur avec :(3) un agent de contrôle de stabilité choisi parmi le groupe incluant des esters partiels acides gras à longue chaîne avec des polyoles, des amines alkyles élevées, des acides amides gras, et des copolymères acides carboniques insaturés en oléofine, et (4) un agent de gonflement hydrocarboné présentant 1 à 6 atomes de carbone et un point d'ébullition compris entre -175°C et 50°C; et ( c ) à activer ledit agent de gonflement pour expanser le mélange en résultant jusqu'à obtenir une mousse polyoléfine à cellules sensiblement fermées, ayant une densité comprise entre 14,4 et 40 kilogrammes par mètre cube.

16. Procédé selon la revendication 15, dans lequel ledit polymère oléfine est du polyéthylène à basse densité.

17. Procédé selon la revendication 16, dans lequel ledit agent de gonflement est de l'isobutane.

18. Procédé selon la revendication 17, dans lequel ledit agent de contrôle de stabilité est du monostéarate glycéryle, du distéarate glycéryle ou un mélange des deux.

19. Procédé selon la revendication 17, dans lequel ledit élastomère est du caoutchouc styrène-butadiène.

20. Procédé selon la revendication 19, dans lequel ledit caoutchouc styrène-butadiène est un bloc de copolymère contenant 23% à 75% en poids de styrène lié.

21. Procédé selon la revendication 17, caractérisé en ce que la quantité dudit élastomère est comprise entre 5 à 15 parties en poids, pour 100 parties en poids de ladite résine polymère oléfine.
